# EUROPEAN PATENT APPLICATION

(11) **EP 0 629 656 A2**
(43) Date of publication of application: **21.12.1994**
(21) Application number: 94303714.3
(22) Date of filing: 24.05.1994
(51) Int. Cl.: C08K 5/00, C08L 33/06, C08L 75/04, C08K 5/15, C08K 5/3417

(54) **Photochromic article**

(30) Priority: 26.05.1993 JP 124245/93
(71) Applicant: NIKON CORPORATION, Tokyo (JP)
(72) Inventor: Miura, Yoshihiro, Setagaya-ku, Tokyo (JP); Taki, Kazuya, Kawasaki-shi, Kanagawa-ken (JP); Niikura, Hiroshi, Chigasaki-shi, Kanagawa-ken (JP)
(74) Representative: West, Alan Harry

(57) **Abstract**

A photochromic article comprises a transparent matrix composed of a material selected from acrylic resins and urethane resins, a first photochromic compound dispersed in the matrix and consisting of a composition selected from chromene derivatives, a second photochromic compound dispersed in the matrix and consisting of a composition selected from fulgide or fulgimide compounds, and a dye for coloring the matrix. The dye is adopted to color the matrix either in the color developed by a photochromic compound, with the fastest color fading speed, among the photochromic compounds, or the complementary color of the color developed by a photochromic compound, with the slowest color fading speed, among the photochromic compounds, or the mixed color of the colors developed by all of the photochromic compounds.

## Description

The present invention relates to a photochromic article containing plural photochromic compounds.

Photochromism is a phenomenon of reversible color change in certain compounds, characterized by rapid color change when irradiated with ultraviolet-containing light such as solar light or light from a mercury lamp and returning to the original color when the light irradiation is terminated. Compounds with such property are called photochromic compounds, and are recently investigated for various applications such as recording materials, optical elements for example an optical shutter, photochromic glass or eyeglass lenses.

The photochromic compounds are individually used in most cases, but mixing of two or more photochromic compounds, for increasing the freedom in the developed color, is being investigated. Particularly in photochromic plastic lenses, there are required certain particular colors such as gray, amber or brown, and the use of plural photochromic compounds is disclosed for example in the Japanese Patent Laid-open Application Nos. 3-252493 and 3-282445.

It has been revealed, however, that the mixed used of two or more photochromic compounds results in a drawback of variation in color, because the time from the start of light irradiation to color development and the time from the termination of light irradiation to color fading vary from compound to compound. More specifically, in case of mixing two or more photochromic compounds, the desired mixed color is obtained when both compounds are in the color-developed state, but, in the course of color development, there at first develops the color of a compound with the faster color developing speed, and in the color fading phase, there remains the color developed by a compound with the slower color fading speed. Consequently, in the color developing and fading phases, there cannot be obtained the desired mixed color, but only obtained is one of the colors constituting the mixed color.

Such drawback of showing a color different from the desired mixed color in the color developing and fading phases is particularly conspicuous in the latter, because the color fading speed varies more significantly than the color developing speed among different photochromic compounds. For example, according to the description of the Japanese Patent Laid-open Application Nos. 2-69471, 3-281689 and 3-95184 which respectively disclose the color fading speed (time required for the absorbance to reach 1/2 after light irradiation for 60 seconds) of chromene derivatives, fulgimide compounds and spirooxazine compounds, the color fading speed of the chromene derivatives is considerably slower than those of the fulgimide compounds and spirooxazine compounds. Consequently, if these compounds are used as a mixture, the color of the chromene derivative fades slower after the termination of light irradiation, so that, in the color fading phase after the termination of light irradiation, the color changes from the mixed color to the color of the chromene derivative before complete fading.

Such phenomenon of color change in the photochromic article, in the color fading phase, from the mixed color to the color of the photochromic compound with the slower color fading speed (such phenomenon being hereinafter called "color shift") becomes an obstacle in the use of such photochromic article as an optical element as the wavelength of the light transmitted therethrough varies. Such phenomenon is particularly serious in the eyeglass lenses which are required to develop color preferred by the users.

Also in case of preparing the photochromic article by uniformly dispersing the photochromic compounds in a matrix, the desired light controlling performance cannot be obtained with any of the fulgide or fulgimide compounds, spirooxazine compounds and chromene derivatives when allylic resin is employed as the thermosetting matrix material. Also the desired light controlling performance cannot be obtained with the spirooxazine compounds in case acrylic or urethane resin is employed as the matrix. Also in a method of impregnating the surfacial layer of a transparent matrix with photochromic compounds, each of the spirooxazine compounds, chromene derivative, fulgide and fulgimide compounds exhibits the light controlling performance when allylic resin is employed as the matrix, but the desired color density cannot be developed in a mixture. Besides the light fastness is inferior to that in the case of uniform dispersion of individual compound in the matrix, and is not in the practical level particularly in the fulgide and fulgimide compounds. Furthermore, the light controlling performance is inferior in case acrylic or urethane resin is employed as the matrix instead of the allylic resin.

A first object of the present invention is to provide a photochromic article, such as a light-controlling plastic lens, free from the aforementioned drawbacks and capable of light control even when acrylic or urethane resin is employed as the matrix, and a second object is to minimize the color shift phenomenon during the color fading phase.

The above-mentioned objects can be attained, according to the present invention, by a photochromic article comprising a transparent matrix composed of a material selected from acrylic resin and urethane resin, at least two photochromic compounds selected from chromene derivatives and fulgide and fulgimide compounds and dispersed in the matrix, and a dye for coloring the matrix. Such composition enables to provide a photochromic article, such as a photochromic (light-controlling) plastic lens, an optical filter, a display material or a decoration material, capable of exhibiting light controlling performance even when acrylic or urethane resin is employed as the matrix.

Also the above-mentioned second object, of minimizing the color shift during the color fading phase, can be attained by employing a dye which colors the matrix either in the developed color of a photochromic compound of the fastest color fading speed, among those employed in the present invention, or the complementary color of the developed color of a photochromic compound of the slowest color fading speed, or the mixed color of the developed colors of all the photochromic compounds.

In the present invention, the matrix in which the photochromic compounds are to be dispersed can be composed of thermoplastic resin or thermosetting resin.

Any thermoplastic resin capable of uniformly dispersing the photochromic compounds may be employed for this purpose, and examples of such thermoplastic resin include polycarbonate, polystyrene, polyacrylonitrile, polyvinylalcohol, polyacrylamide, poly(2-hydroxyethylmethacrylate), polydimethylsiloxane, polymethyl acrylate, polyethyl acrylate, polymethyl methacrylate and polyethyl methacrylate.

Also examples of thermosetting resin include polymers of polyhydric esters of acrylic acid or methacrylic acid such as ethyleneglycol diacrylate, diethyleneglycol dimethacrylate, ethyleneglycol bisglycidyl methacrylate, bisphenol-A dimethacrylate, 2,2-bis(4-methacryloyloxyethoxyphenyl)propane or 2,2-bis(3,5-dibromo-4-methacryloyloxyethoxyphenyl)propane; polyhydric esters of thioacrylic acid or thiomethacrylic acid such as 1,2-bis(methacryloylthio)ethane, bis(2-acryloylthioethyl)ether or 1,4-bis(methacryloylthiomethyl) benzene; or polyfunctional monomers capable of radical polymerization such as divinylbenzene; copolymers of each of the foregoing monomers with a monofunctional monomer capable of radical polymerization for example an unsaturated carboxylic acid such as acrylic acid, methacrylic acid or maleic anhydride; an acrylate or methacrylate ester such as methyl acrylate, methyl methacrylate, benzyl methacrylate, phenyl methacrylate or 2-hydroxyethyl methacrylate; a fumalic ester such as diethyl fumalate or diphenyl fumalate; a thioacrylate or thiomethacrylate ester such as methyl thioacrylate, benzyl thioacrylate or benzyl thiomethacrylate; or a vinylic compound such as styrene, chlorostyrene, methylstyrene, vinylnaphthalene or bromostyrene; additive copolymers of the aforementioned polyfunctional monomer capable of radical polymerization with a polyhydric thiol compound such as ethane diol, propane triol, hexane dithiol, pentaerythrytol tetraquisthioglycolate or di(2-mercaptoethyl)ether; and additive polymers of a polyvalen isocyanate such as diphenylethane diisocyanate, xylylene diisocyanate or p-phenylene diisocyanate with a polyhydric alcohol such as ethylenegylcol, trimethylol propane, pentaerythrytol or bisphenol-A or the aforementioned polyhydric thiol compound. Also the foregoing monomers may be employed singly or as a mixture of two or more kinds.

In the photochromic article of the present invention, plural photochromic compounds may be selected, without any limitation, from those already known in the art.

For example, there can be employed (1) chromene and its derivatives, and (2) fulgide and fulgimide compounds.

Chromene and photochromic compounds derived therefrom, employable in the present invention, include the following.

Chromene is represented by the following structure. 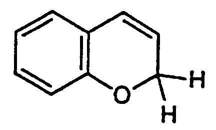
Any chromene derivative, having the above-shown skeleton, may be employed without any limitation. In the present invention, particularly preferred are the chromene derivatives represented by the following general formula [I] because of excellent photochromic property: 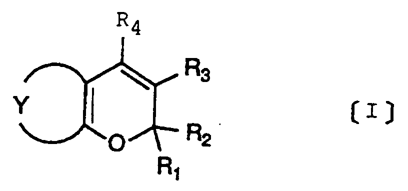
where 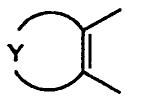
stands for an optionally substituted aromatic hydrocarbon radical or an optionally substituted unsaturated heterocyclic radical; R₁ and R₂ stand for same or different radicals each selected from a hydrogen atom, a hydrocarbon radical and a substituted amino radical, or form a ring in combination; and R₃ and R₄ stand for same or different radicals, each selected from a hydrogen atom, a hydrocarbon radical and a substituted amino radical.

In the foregoing general formula [I], the radical: 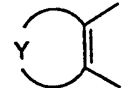
stands for an optionally substituted aromatic hydrocarbon radical or an optionally substituted unsaturated heterocyclic radical. Examples of such aromatic hydrocarbon radical include divalent radicals derived from a benzene ring or 2 to 4 condensed benzene rings, such as benzene ring, naphthalene rings, phenanthlene rings or anthracene rings. Also such aromatic hydrocarbon radical may be provided with substituent radical or radicals. Examples of such substituent include halogen atoms such as fluorine, chlorine, bromine or iodine; hydroxyl radical; cyano radical; nitro radical; amino radical; carboxyl radical; alkylamino radicals with 1 to 4 carbon atoms such as methylamino or diethylamino radical; lower alkyl radicals with 1 to 4 carbon atoms such as methyl, ethyl, propyl or t-butyl radical; lower halogenated alkyl radicals with 1 to 3 halogen atoms such as trifluoromethyl or 2-chloroethyl radical; lower alkoxy radicals with 1 to 4 carbon atoms such as methoxy, ethoxy or t-butoxy radical; aryl radicals with 6 to 10 carbon atoms such as phenyl, naphthyl or tolyl radical; aryloxy radicals with 6 to 14 carbon atoms such as phenoxy or 1-naphtoxy radical; aralkyl radicals with 7 to 15 carbon atoms such as benzyl, phenylethyl or phenylpropyl radical; and aralkoxy radicals with 7 to 15 carbon atoms such as benzyloxy or phenylpropoxy radical; and alkylthio radicals with 1 to 4 carbon atoms. These substituents may be mutually same or different, and may be present in any positions.

Also the optionally substituted unsaturated heterocyclic radical represented by: 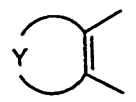
in the foregoing general formula [I] can be a 5- or 6-membered ring containing oxygen, sulfur or nitrogen atoms or a heterocyclic radical formed by condensation of a benzene or cyclohexene ring thereto. Specific examples of such radical include divalent heterocyclic radicals derived from a nitrogen-containing heteroring such as pyridine, quinoline, pyrrole or indole ring; or from a sulfur-containing heteroring such as thiophene or benzothiophene ring. A particularly high developed color density can be obtained in case of a condensed two-ring heterocyclic radical consisting of a benzene ring and a 5- or 6-membered heteroring.

The unsaturated heterocyclic radical may be provided, without any limitation, with substituents same as the aforementioned ones for the aromatic hydrocarbon radical.

Furthermore, there may be provided one or more substituents represented by:

-R₅-S-R₆

or 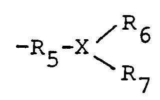
wherein R₅ is an alkylene radical or -(OR₈)ₙ- in which R₈ stands for an alkylene radical and n stands for a positive integer; R₆ and R₇ stand for same or different alkyl radicals; and X stands for -N〈, -P〈, 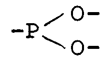
or 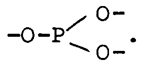
The above-mentioned alkyl or alkylene radical preferably contains 6 to 20 carbon atoms, and n in:

-(O-R₈)ₙ-

is preferably an integer corresponding to 6 to 20 carbon atoms in total.

In the foregoing general formula [I], the hydrocarbon radical indicated by R₁, R₂, R₃ or R₄ can be, for example, an alkyl, aryl or aralkyl radical. Among these, alkyl radical is not particularly limited, but in general contains 1 to 10 carbon atoms, preferably 1 to 4 carbon atoms. Specific examples of such alkyl radical include methyl, ethyl and isopropyl radicals. Also the aryl radical preferably contains 6 to 14 carbon atoms, and can be, for example, phenyl or naphthyl. The aralkyl radical preferably contains 7 to 14 carbon atoms and can be, for example, benzyl, phenylethyl, phenylpropyl or naphthylmethyl.

Also the substituted amino radical indicated by R₁, R₂, R₃ or R₄ in the foregoing general formula [I] is represented by a general formula: 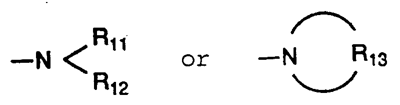
wherein R₁₁ and R₁₂ stand for same or different radicals, each preferably selected from a hydrogen atom and a hydrocarbon radical. Said hydrocarbon radical can be advantageously selected from those for R₁ to R₄ indicated above. In case the substituted amino radical is represented by: 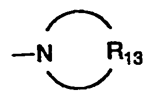
R₁₃ is preferably an alkylene radical such as tetramethylene or pentamethylene radical; an oxyalkylene radical such as 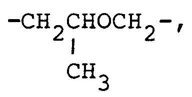
-CH₂OCH₂CH₂-, -CH₂CH₂OCH₂CH₂- or -CH₂O(CH₂)₃-; a thioalkylene radical such as -CH₂SCH₂CH₂-, CH₂S(CH₂)₃- or -CH₂CH₂SCH₂CH₂-; or an azoalkylene radical such as 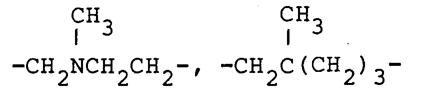
or

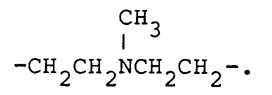

Furthermore, in the foregoing general formula [I], R₁ and R₂ may constitute a ring in combination, and such ring is not particularly limited but can advantageously be a cycloalkyl, bicycloalkyl or tricycloalkyl ring with 5 to 10 carbon atoms. Specific examples include divalent radicals derived from cyclopentyl, cyclohexyl, cycloheptyl, norbornane, adamantane and bicyclo[3. 3. 1] rings. For obtaining a satisfactory developed color density in the high temperature region, the radicals R₁ and R₂ are either respectively composed of an alkyl radical containing at least a carbon atom and an alkyl radical containing at least two carbon atoms, or constitute a ring in combination.

In chromene and its derivatives mentioned above, the radical: 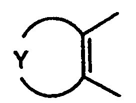
in the foregoing general formula [I] is preferably composed of a condensed ring structure containing at least two rings, for obtaining a high developed color density. Also in case R₁ and R₂ constitute a ring in combination in the foregoing general formula [I], there can also advantageously by employed a compound in which a ring is condensed to the 5 and 6 positions of the chromene skeleton.

In the following there will be explained the fulgide or fulgimide compound, advantageously employable, as a photochromic compound in the present invention, in combination with chromene or its derivative explained above. Any fulgide compound having a structure represented by the following formula: 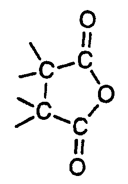
and exhibiting photochromic property can be employed without any limitation. Also any fulgimide compound having a structure represented by the following formula: 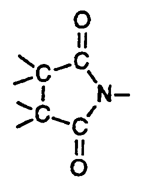
and exhibiting photochromic property can be employed without any limitation.

In the present invention, as the fulgide or fulgimide compound, there is generally utilized a compound represented by the following general formula [II]: 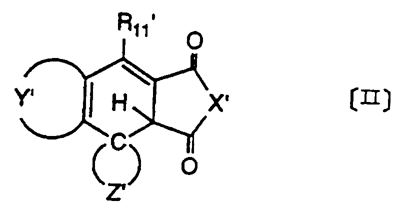
wherein: 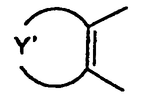
is an optionally substituted aromatic hydrocarbon radical or an optionally substituted unsaturated heterocyclic radical;
R₁₁' is an optionally substituted monovalent hydrocarbon radical or an optionally substituted monovalent heterocyclic radical;

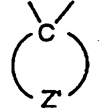

is an optionally substituted norbornylidene radical or an optionally substituted adamantylidene radical; and
X' stands for an oxygen atom, or a radical 〉N-R₁₂', 〉N-A₁'-B₁'- (A₂')ₘ-(B₂')ₙ-R₁₃' , 〉N-A₃'-A₄' or 〉N-A₃'-R₁₄';
wherein:
R₁₂' stands for a hydrogen atom, an alkyl radical or an aryl radical;
A₁', A₂' and A₃' stand for same or different radicals each representing an alkylene, alkylidene, cycloalkylene, or alkylcycloalkane-diyl radical;
B₁' and B₂' stand for same or different radicals each representing -O-, 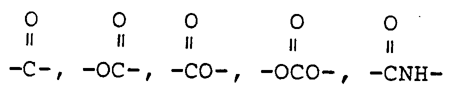
or 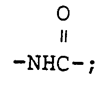
m and n independently stand for a value 0 or 1, but n = 0 in case m = 0;
R₁₃' is an optionally substituted alkyl, naphthyl or naphthylalkyl radical;
A₄' is an optionally substituted naphthyl radical; and
R₁₄' stands for a halogen atom or a cyano or nitro radical.

In the foregoing general formula [II], the aromatic hydrocarbon radical or the unsaturated heterocyclic radical represented by: 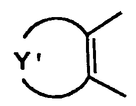
may assume any of the structures already explained for the radical: 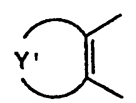
in the foregoing general formula [I]. Also said aromatic hydrocarbon radical or unsaturated heterocyclic radical may be provided, without any limitation, with substituents same as those for the aromatic hydrocarbon radical and unsaturated heterocyclic radical represented by: 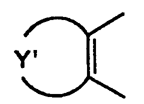
in the foregoing general formula [I].

The above-mentioned radical: 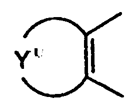
is preferably a divalent aromatic hydrocarbon radical or a divalent unsaturated heterocyclic radical, which may be substituted by at least one selected from a group consisting of a halogen atom, nitro radical, cyano radical, amino radical, alkylthio radicals with 1 to 4 carbon atoms, alkyl radicals with 1 to 4 carbon atoms and alkoxy radicals with 1 to 4 carbon atoms.

Also the above-mentioned radical: 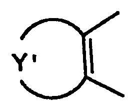
is more preferably an aryl radical with 6 to 14 carbon atoms, a 5- or 6-membered heteromonocyclic radical containing a nitrogen, oxygen or sulfur atom, or a condensed heterocyclic radical formed by condensation of a benzene ring or a cyclohexene ring to the above-mentioned heterocyclic radical, each of which may be provided with 1 to 3 substituents mentioned above.

Furthermore the above-mentioned radical: 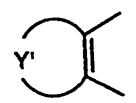
is preferably a divalent benzene residue; a 5- or 6-membered heteromonocyclic radical containing a hetero atom; or a condensed heterocyclic radical formed by condensation of a benzene ring or a cyclohexene ring to the above-mentioned heterocyclic radical. In a similarly preferable embodiment, said benzene residue, hetetromonocyclic radical or condensed heterocyclic radical may be provided with one or two of the aforementioned substituents.

In the foregoing general formula [II], R₁₁' is an eventually substituted monovalent hydrocarbon or heterocyclic radical.

The hydrocarbon radical represented by R₁₁' may be composed of any of the hydrocarbon radicals explained for R₁ - R₄ in the chromene derivative represented by the foregoing general formula [I].

Also the heterocyclic radical represented by R₁₁' is preferably a 5- or 6-membered heteromonocyclic radical containing 1 to 3, preferably 1 to 2 hetero atoms of at least a kind, such as nitrogen, oxygen or sulfur atom, or a condensed heterocyclic radical formed by condensation of a benzene ring to the above-mentioned heterocyclic radical. Specific examples of such heterocyclic radical include, in addition to the examples of the unsaturated heterocyclic radical explained in the definition of the radical: 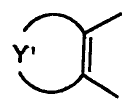
saturated heterocyclic radicals derived for example from piperidine, piperadine, morpholine, pyrrolidine, indoline or coumarone.

The above-mentioned hydrocarbon or heterocyclic radical represented by R₁₁' may be provided with substituents. Such substituents may be present up to five, preferably up to three in said hydrocarbon or heterocyclic radical, and examples of such substituents can be same as those explained in the foregoing for the radical:

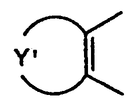

The preferred examples of the above-mentioned radical R₁₁' include halogen atoms; alkyl radicals with 1 to 20 carbon atoms which may be substituted with an alkoxy or phenyl radical with 1 to 4 carbon atoms; aryl radicals with 6 to 10 carbon atoms which may be substituted with a halogen atom or an alkoxy radical with 1 to 4 carbon atoms; and 5- or 6-membered heteromonocyclic radicals containing 1 to 3, particularly 1 nitrogen, carbon or sulfur atom or condensed heterocyclic radicals formed by condensation of a benzene ring to the above-mentioned heterocyclic radical, preferably the heteromonocyclic radicals.

Particularly preferred as said radical R₁₁' is an alkyl radical with 1 to 6 carbon atoms, an aralkyl radical with 7 to 10 carbon atoms or an aryl radical with 6 to 10 carbon atoms.

In the foregoing general formula [II] of the present invention, the radical: 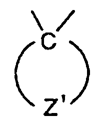
stands for an optionally substituted norbornylidene or adamantylidene radical, wherein the norbornylidene radical is represented by: 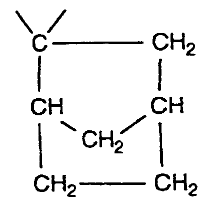
while the adamantylidene radical is represented by:

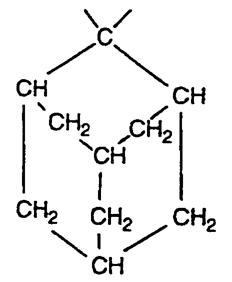

The foregoing formulas indicate unsubstituted skeletal structures of norbornylidene radical and adamantylidene radical. In these radicals, the hydrogen atom in these formulas may be replaced by a substituent, and there may be present one or more substituents. In the presence of such substituents, the species, number and positions thereof are arbitrarily selected according to the purpose and application. Also in the presence of plural substituents, they may be mutually same or different.

Examples of the substituents for the above-mentioned norbornylidene or admantylidene radical include hydroxy radical; alkylamino radicals with 1 to 4 carbon atoms such as methylamino or diethylamino radical; alkoxy radicals with 1 to 4 carbon atoms such as methoxy, ethoxy or tert-butyl radical; aralkoxy radicals with 7 to 15 carbon atoms such as benzyloxy radical; aryloxy radicals with 6 to 14 carbon atoms such as phenoxy or 1-naphthoxy radical; lower alkyl radicals with 1 to 4 carbon atoms such as methyl, ethyl or t-butyl radical; halogen atoms such as fluorine, chlorine or bromine atom; cyano radical; carboxyl radical; alkoxycarbonyl radicals with 2 to 10 carbon atoms such as ethoxycarbonyl radical; halogen-substituted alkyl radicals with 1 or 2 carbon atoms such as trifluoromethyl radical; nitro radical; aryl radicals with 6 to 14 carbon atoms such as phenyl or tolyl radical; aralkyl radicals with 7 to 15 carbon atoms such as phenylethyl or phenylpropyl radical; and alkylthio radicals with 1 to 4 carbon atoms.

Preferred examples of such substituents include halogen atoms, hydroxy radical, alkyl radicals with 1 to 4 carbon atoms, alkoxy radicals with 1 to 4 carbon atoms, alkoxycarbonyl radicals with 2 to 10 carbon atoms, aralkyl radicals with 7 to 9 carbon atoms, and aryl radicals with 6 to 10 carbon atoms.

In the foregoing general formula [II] of the present invention, X' stands for an oxygen atom -(O)-, or a radical 〉N-R₁₂', 〉N-A₁'-B₁'-(A₂')ₘ-(B₂')ₙ-R₁₃', 〉N-A₃'-A₄' or 〉N-A₃'-R₁₄'. In consideration of the durability of the photochromic performance of the obtained compound, X' in said general formula [II] is preferably a radical 〉N-A₁'-B₁'-(A₂')ₘ-(B₂')ₙ-R₁₃', 〉N-A₃'-A₄' or 〉N-A₃'-R₁₄', particularly a radical 〉N-A₃'-A₄' or 〉N-A₁'-B₁'-(A₂')ₘ-(B₂')ₙ-R₁₃', wherein R₁₃' is an alkyl radical with 1 to 10 carbon atoms optionally substituted with 1 to 3 substituents selected from a group consisting of halogen atoms, cyano and nitro radicals.

In case X' in the general formula [II] is a radical 〉N-A₁'-B₁'-(A₂')ₘ-(B₂')ₙ-R₁₃' in which R₁₃' is naphthyl radical or a naphthylalkyl radical, or a radical 〉N-A₃'-A₄', the number of atoms in the main chain, between the napthyl radical represented by R₁₃' or A₄' and the imido radical (〉N-), is preferably 3 to 7, in order to obtain a compound with excellent durability in the photochromic performance.

In the following there will be given detailed explanation on R₁₂', R₁₃', R₁₄', A₁', A₂', A₃', A₄', B₁', B₂', m and n in the definition of X'.

R₁₂' stands for a hydorgen atom, an alkyl radical or an aryl radical. Examples of such alkyl radical include methyl, ethyl, propyl, n-, iso- or tert-butyl, pentyl, hexyl, octyl and decyl radicals, among which preferred are those with 1 to 20 carbon atoms, and particularly preferred are those with 1 to 10 carbon atoms. Also examples of said aryl radical include those with 6 to 10 carbon atoms such as phenyl, tolyl or naphthyl radical.

A₁', A₂' and A₃' stand for mutually same or different radicals, each of which can be an alkylene radical, an alkylidene radical, a cycloalkylene radical or an alkylcycloalkane-diyl radical. Examples of these radicals include alkylene radicals with 1 to 10 carbon atoms such as methylene, ethylene, propylene, butylene, trimethylene, tetramethylene or 2,2-dimethyltrimethylene radical; alkylidene radicals with 2 to 10 carbon atoms such as ethylidene, propylidene or isopropylidene radical; cycloalkylidene radicals with 3 to 10 carbon atoms such as cyclohexylene radical; and alkylcycloalkane-diyl radicals with 6 to 10 carbon atoms such as 2-methylcyclohexane-α,1-diyl 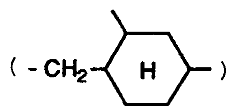
or 4-methylcyclohexane-α,1-diyl 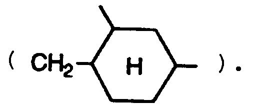
Preferred examples for A₁' and A₂' include alkylene radicals with 1 to 6 carbon atoms, alkylidene radicals with 2 to 6 carbon atoms, cycloalkylene radicals with 3 to 6 carbon atoms and alkylcycloalkane-diyl radicals with 6 to 7 carbon atoms.

B₁' and B₂' may be mutually same or different, and are respectively selected from the following seven bonding radicals -O-, 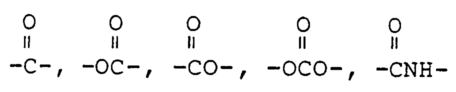
and

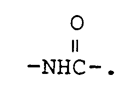

Also m and n independently stand for 0 or 1, and, in case of 0, -(A₂')ₘ- or -(B₂')ₙ- means a mere coupling bond, and, n is 0 if m is 0.

R₁₃' stands for an optionally substituted alkyl, naphthyl or naphthylalkyl radical. The number of carbon atoms in said alkyl radical is not particularly limited, but is preferably within a range of 1 to 4, and that in the alkyl part of said naphthylalkyl radical is preferably 1 to 4.

Substituents in the above-mentioned radicals are not particularly limited, but the above-mentioned alkyl radical may be provided with 1 to 3 substituents selected from a group consisting of halogen atoms, cyano radical and nitro radical, and the above-mentioned naphthyl radical may be provided with 1 to 3 substituents selected from a group consisting of halogen atoms, cyano radical, nitro radical, alkylamino radicals with 1 to 3 carbon atoms, alkyl radicals with 1 to 3 carbon atoms and alkoxy radicals with 1 to 3 carbon atoms. The alkyl radical represented by R₁₃' may be any of alkyl radicals explained before for R₁₂'. Also said naphthylalkyl radical can for example be naphthylmethyl, naphthylethyl, naphthylpropyl or naphthylbutyl radical.

A₄' stands for optionally substituted naphthyl radical. The kind of substituents is not particularly limited, and said naphthyl radical may be provided with 1 to 3 substituents selected from a group consisting of halogen atoms, amino radical, nitro radical, alkylamino radicals with 1 to 3 carbon atoms, alkyl radicals with 1 to 3 carbon atoms and alkoxy radicals with 1 to 3 carbon atoms. R₁₄' stands for a halogen atom, cyano radical or nitro radical.

In the foregoing definitions of R₁₃' and A₄', examples of halogen atom include fluorine, chlorine and bromine.

The above-explained photochromic compounds are employed, with respect to 100 parts by weight of the matrix, in an amount of 0.01 to 10 parts by weight, preferably 0.05 to 3 parts by weight.

The matrix may be colored with a dye, for example by heated immersion method or by monomer dyeing method.

The heated immersion method consists of uniformly dispersing or dissolving dye into solvent such as water, and immersing the matrix therein for a predetermined period under heating at a predetermined temperature. Dyeing may also be achieved for example by transfer dyeing or solvent dyeing.

Dispersion dyes can be generally employed as the dye. For a blue dye, there can be employed, for example, Dianix Blue (B-SE, KR-FS, RC-E, RN-E, AC-E, EB-E, KB-FS, BG-FS, HB-FS, KG-SE, GR-E) (manufactured by Mitsubishi Chemical Industries); Sumikaron Blue (GC, BR, R, GG) (manufactured by Sumitomo Chemical Co.); Miketon Polyester Blue (GFL, SG, 3G, BLN, BCl, TGSF, GRN) (manufactured by Mitsui Toatsu Chemical Co.); Kayalon Polyester Blue (GRF, 3GF, GGF, BBF, TSF, RGF) (manufactured by Nippon Kayaku Co.) etc. For a violet dye there can be employed, for example, Dianix Violet (5R-SE, 3R0FS, 2R-E) (manufactured by Mitsubishi Chemical Industries Co.); Sumikaron Violet (RR, RS) (manufactured by Sumitomo Chemical Co.); Miketoron Polyester Violet (BN, FR) (manufactured by Mitsui Toatsu Chemical Co.); Kayalon Polyester Violet (manufactured by Nippon Kayaku Co.) etc. Also as a red dye there can be employed, for example, Dianix Red (R-E, 3G-FS, G-SE, BG-FS, FL-FS, U-SE, AC-E, BN-SE, B-FS, KB-SE) (manufactured by Mitsubishi Chemical Industries Co.); Sumikaron Red (3G, FB, 3BR, BGS, B, G, 2SG) (manufactured by Sumitomo Chemical Co.); Miketon Polyester Red (FB, FL, 2BSF, FN) (manufactured by Mitsui Toatsu Chemical Co.); Kayalon Polyester Red (Rubine-OFSF, BRSF, BSF, LSF, 2BSF) (manufactured by Nippon Kayaku Co.) etc.

The solvent usually consists of water, but ethanol, butanol, benzyl alcohol, ethyl benzoate, phenol, perchloroethylene etc. may be added if necessary.

The conditions of heated immersion vary depending upon the material of the matrix or the kind of dye, but there are usually employed a heated temperature of 50° to 130°C and an immersion time of 3 seconds to 1 hour.

The monomer dyeing method consists of uniformly dispersing or dissolving the dye or pigment in the resin monomers and effecting the molding.

Examples of usable dye include, for a blue dye, Mitsui PS BLUE (3R, RR, BN) (manufactured by Mitsui Toatsu Chemical Co.); Kayaset Blue N (manufactured by Nippon Kayaku Co.); Diaresin Blue (J, G, N, K, P, LR, H3G) (manufactured by Mitsubishi Chemical Co.); Sumiplast Blue (G, OA, OR, 3R, BG) (manufactured by Sumitomo Chemical Co.) etc., for a violet dye, Mitsui PS Violet (RR, RC) (manufactured by Mitsui Totatsu Chemical Co.); Diaresin Violet (A, D) (manufactured by Mitsubishi Chemical Co.); Sumiplast Violet RR (manufactured by Sumitomo Chemical Co.) etc., and, for a red dye, Mitsui PS Red (HGG, GG, G), Orange (GG, HG) (manufactured by Mitsui Toatsu Chemical Co.); Kayaset Red (G, 130, B), Orange G (manufactured by Nippon Kayaku Co.); Diaresin Red (GG, Z, S, HS, A, H, K, H5H), Orange (HS, G) (manufactured by Mitsubishi Chemical Co.); Sumiplast Red (AS, 3B, FB), Orange (G, 3G) (manufactured by Sumitomo Chemical Co.) etc. but these are not limitative.

The photochromic article of the present invention may be added with an ultraviolet absorber for improving the photochromic performance and the light fastness of the photochromic compounds. Satisfactory results can be obtained for example by the addition of a sulfur antioxidant, a hindered phenolic antioxidant, a hindered amine optical stabilizer or a singlet oxygen quencher. Specific examples of such additive include Sheersorp UV1084, SHEERSORP 3346 (both manufactured by American Cyanamide Corp.); UV-check AM101, UV-check AM105 (both manufactured by Ferro Corpcration); Ilgastab 2002, Tinuvin 765, Tinuvin 144, Chimasory 944, Tinuvin 622, Ilganox 101, Ilganox 245 (all manufactured by Ciba-Geigy); Rilex NBC (manufactured by duPont de Nemeurs); Sheersorp 3346 (manufactured by American Cyanamide Corp.); Sanol LS-1114, Sanol LS-744, Sanol LS2626 (manufactured by Sankyo Co., Ltd.); Sumilizer GA-80, Sumilizer GM, Sumilizer BBM-S, Sumilizer WX-R, Sumilizer S, Sumilizer BHT, Sumilizer TP-D, Sumilizer TPL-R, Sumilizer TPS, Sumilizer MB (all manufactured by Sumitomo Chemical Co.); Mark AO-50, Mark AO-20, Mark AO-30, Mark AO-330, Mark AO-23 (all manufactured by Adeka Argus Corp.); Antioxidantosh HPM-12 (manufactured by S.F.O.S.) etc.

The above-mentioned ultraviolet absorber can be employed, with respect to 100 parts by weight of the matrix, in an amount of 0.01 to 30 parts by weight, preferably 0.03 to 3 parts by weight.

In the present invention, the color shift in the color fading phase is prevented by coloring the matrix, containing at least two photochromic compounds, with a dye. The dye to be employed is to color the matrix either in the developed color of a photochromic compound of the fastest color fading speed, among plural photochromic compounds, or the complementary color of the developed color of a photochromic compound of the slowest color fading speed, or the mixed color of the developed colors of all the plural photochromic compounds.

If the photochromic article is colored with a dye into the developed color of a photochromic compound of the fastest color fading speed, among the plural photochromic compounds, the dye color and the color of the other photochromic compound are mixed to provide a mixed color similar to the fully developed color even after, in the color fading phase, the photochromic compound of the fastest color fading speed has faded.

On the other hand, if the photochromic article is colored with a dye into the complementary color of the developed color of a photochromic compound of the slowest color fading speed, the color of the photochromic compound of the slowest color fading speed, remaining in the color fading phase, is mixed with the complementary dye color to provide gray color, thereby preventing color shift.

Also if the photochromic article is colored with a dye into the mixed color of the developed colors of all the plural photochromic compounds, the color of the photochromic compound of the slowest color fading speed, remaining in the color fading phase, is mixed with the dye color, thereby providing a mixed color of the developed colors of all the photochromic compounds with a stronger contribution of the color of the photochromic compound of the slowest color fading speed. Consequently the color shift becomes less conspicuous.

In the following there will be explained examples of the present invention, but it is to be understood that the present invention is by no means limited by these examples. The quantities in the examples are given by parts by weight.

### [Example 1]

As 1st example of the present invention, there will be explained by photochromic lens containing chromene and fulgimide as photochromic compounds and dyed into gray which is the mixed color of the developed colors of both compounds.

At first there will be explained the method of producing the photochromic lens of the present example.

A liquid monomer mixture consisting of 65 parts of chlorostyrene and 35 parts of 2,2-bis(3,5-dibromo-4-methacryloyloxyethoxyphenyl)propane was added with 0.2 parts of a chromene derivative (manufactured by Tokuyama Soda Co.) and 0.8 parts of a fulgimide derivative (manufactured by Tokuyama Soda Co.) as the photochromic compounds and 1.2 parts of perbutyl ND as the radical polymerization initiator, and the mixture was sufficiently mixed by so-called blending method under depassing. This blending method enables to obtain a higher density of the mixed color and to improve the light fastness. The obtained mixture was poured into a mold composed of glass plates and a gasket of ethylenevinyl acetate copolymer, and was subjected to molded polymerization. The polymerization was conducted by gradually raising the temperature from 35° to 100°C over 16 hours and then retaining the temperature at 100°C for 2 hours in an air oven. After the polymerization, the mold was taken out of the air oven and the obtained polymer was removed from the mold.

In the visual observation of the obtained molded article, it developed, under the sunlight, gray color which is mixture of the developed colors of chromene and fulgimide. Subsequently dyeing was conducted with a dye of a color matching said gray color. Nikon Light gray dye (manufactured by Nikon Corp.) was employed for this purpose, and the dyeing was conducted by heated immersion method. More specifically, the above-mentioned molded article was immersed in solution of the dye, and the dyeing was conducted at 90°C for 15 to 90 seconds.

The photochromic lens of the present example showed an initial transmittance of 83.8 - 88.1%, and, after light irradiation for 10 minutes, a maximum transmittance of 50% at 555 nm regardless of the dyeing time. Though chromene fades slower than fulgimide, the (yellow) color of chromene remaining after the fading of fulgimide was mixed with the gray dye color, so that the color shift was not noticeable until the fading of chromene was completed. Also the basic yellowish color (in the non-developed state) of chromene and fulgimide became less conspicuous by mixing with the gray dye color, so that the yellowish tone of the photochromic lens in the absence of light irradiation could be avoided.

### [Comparative Example 1]

A photochromic molded article was prepared by reproducing the method of Example 1, except that the dyeing was not conducted.

The obtained molded article developed gray color under the sunlight. In the subsequent indoor observation, the color fading started immediately. Within several minutes the fulgimide faded, and the color shift was observed as the yellow developed color of chromene alone remained. The yellow color of chromene, having a slower color fading speed, persisted even after several hours. Also because of the basic colors of fulgimide and chromene, the molded article showed stronger yellowish tone in comparison with the polymer resin which did not contain these photochromic compounds.

### [Example 2]

As a 2nd example of the present invention, there will be explained a photochromic lens containing chromene and fulgimide as the photochromic compounds and dyed into blue color by the monomer dyeing method. The blue dye color is the complementary color of the yellow color developed by chromene and is also the color developed by fulgimide.

In the following there will be explained the method for producing the photochromic lens of the present example.

As in the example 1, a mixture of 65 parts of chlorostyrene and 35 parts of 2,2-bis(3,5-dibromo-4-methacryloyloxyethoxyphenyl)propane was added with 0.2 parts of a chromene derivative (manufactured by Tokuyama Soda Co.), 0.8 parts of a fulgimide derivative (manufactured by Tokuyama Soda Co.) and 1.2 parts of perbutyl ND as the radical polymerization initiator, and the obtained mixture was further added with Sumiplast Blue (G) (manufactured by Sumitomo Chemical Co.) in an amount of 0.013 - 0.027 ppm and was sufficiently mixed under degassing. The molding was conducted in the same manner as in the Example 1.

The photochromic lens obtained in this example showed an initial transmittance of 88 - 93% and, after light irradiation for 20 minutes, a maximum transmittance of 48% at 555 nm, regardless of the amount of addition of the dye. The yellow color of chromene remaining after the fading of fulgimide was mixed with the complementary blue dye color to provide gray color, so that the gray color obtained when both fulgimide and chromene were in the color-developed state was retained. Consequently the color shift was not noticeable until the fading of chromene was completed. Besides the yellowish basic color (in the non-developed state) of chromene and fulgimide became less conspicuous by mixing with the complementary blue dye color, so that the yellowish tone of the photochromic lens in the non-irradiated state could be avoided.

### [Example 3]

As a 3rd example of the present invention, there will be explained another example of photochromic lens containing chromene and fulgimide as the photochromic compounds and further dyed into gray color which is the mixed color of the developed colors of both compounds.

The photochromic lens of this example was prepared in the following manner.

A mixture of 100 parts by weight of m-xylenediisocyanate, 130 parts by weight of pentaerythritoltetraquis-3-mercaptopropionate, 1 part by weight of di-n-butyl phosphate as the releasing agent and 0.02 parts by weight of dibutyl tin dichloride as the polymerization initiator was added with 0.2 parts of a chromene derivative (manufactured by Tokuyama Soda Co.) and 0.8 parts of a fulgimide derivative (manufactured by Tokuyama Soda Co.), and the obtained mixture was sufficiently mixed under degassing. The obtained mixture was poured into a mold composed of glass plates and a gasket of ethylene-vinyl acetate copolymer and was subjected to molded polymerization. The polymerization was conducted by gradually raising the temperature from 35° to 120°C over 15 hours and then maintaining the temperature at 120°C for 2 hours in an air oven. After the polymerization, the mold was taken out of the air oven and the molded article was removed from the mold.

Under the sunlight, the obtained molded article developed gray color which was the mixed colors developed by chromene and fulgimide. The dyeing was conducted with a dye of matching gray color, and was conducted with the heated immersion method. The molded photochromic article was dyed for 15 to 90 seconds at 90°C, by immersion in solution containing Nikon Light Gray dye (manufactured by Nikon Corp.).

The photochromic lens obtained in this example showed an initial transmittance of 80.8 - 85.1% and, after light irradiation for 10 minutes, a maximum transmittance of 53% at 555 nm, regardless of the dyeing time. The yellow chromene color, remaining after the fading of fulgimide, was mixed with the gray dye color, so that the color shift was not noticeable until the fading of chromene was completed. Besides the yellowish basic color (in the non-developed state) of chromene and fulgimide became less conspicuous by mixing with the gray dye color, so that the yellowish tone of the photochromic lens in the non-irradiated state could be avoided.

### [Example 4]

The photochromic lens of a 4th example of the present invention was prepared in a similar manner as in the Example 3, but there was employed a dye of blue color which was the complementary color of yellow color developed by chromene and was same as the color developed by fulgimide.

Polymer containing photochromic compounds was prepared in the same manner as in the Example 3, and was dyed with a blue dye Miketon Polyester BLUE(3G) (manufactured by Mitsui Toatsu Co.) by the heated immersion method. The molded photochromic article was dyed for 15 to 90 seconds at 90°C, by immersion in solution containing the above-mentioned blue dye.

The obtained article showed an initial transmittance of 80.8 - 85.1%, and, after light irradiation for 10 minutes, a maximum transmittance of 53% at 555 nm, regardless of the dyeing time. The yellow color of chromene, remaining after the fading of fulgimide, was mixed with the complementary blue dye color to provide gray color, so that the gray color when chromene and fulgimide are both in the color-developed state could be maintained. Thus the color shift was not noticeable until the fading of chromene was completed. Besides the yellowish basic color (in the non-developed state) of chromene and fulgimide became less conspicuous by mixing with the complementary blue dye color, so that the yellowish tone of photochromic lens in the non-irradiated state could be avoided.

In the foregoing examples, the color shift was prevented by coloring with a dye, but it is also possible to prevent the color shift without relying on the dye, by selecting plural photochromic compounds with substantially matching color fading speeds.

Also in the foregoing examples, the photochromic compounds are dispersed in the matrix while the dye is either dispersed in the matrix material or used for coloring after the molding of the matrix material, but such form is not limitative. For example it is also possible to provide the photochromic compounds and dye as a film on the matrix.

## Claims

1. A photochromic article comprising:
a transparent matrix composed of a material selected from acrylic resins and urethane resins;
at least two photochromic compounds dispersed in the matrix and selected from chromene derivatives, and fulgide and fulgimide compounds; and
a dye for coloring the matrix,
wherein the dye is selected to color the matrix
(i) in the color developed by the photochromic compound having the faster or fastest color fading speed; or
(ii) in the color complementary to that developed by the photochromic compound having the slower or slowest color fading speed; or
(iii) the mixed colors developed by all of the photochromic compounds.

2. A photochromic article comprising:
a transparent matrix composed of a material selected from acrylic resins and urethane resins;
a first photochromic compound dispersed in the matrix and selected from chromene derivatives;
a second photochromic compound dispersed in the matrix and selected from fulgide and fulgimide compounds; and
a dye for coloring the matrix,
wherein the dye is selected to color the matrix in the color developed by the photochromic compound having the faster color fading speed.

3. A photochromic article comprising:
a transparent matrix composed of a material selected from acrylic resins and urethane resins;
a first photochromic compound dispersed in the matrix and selected from chromene derivatives;
a second photochromic compound dispersed in the matrix and selected from fulgide and fulgimide compounds; and
a dye for coloring the matrix,
wherein the dye is selected to color the matrix in the color complementary to that developed by the photochromic compound having the slower color fading speed.

4. A photochromic article comprising:
a transparent matrix composed of a material selected from acrylic resins and urethane resins;
a first photochromic compound dispersed in the matrix and selected from chromene derivatives;
a second photochromic compound dispersed in the matrix and selected from fulgide and fulgimide compounds; and
a dye for coloring the matrix,
wherein the dye is selected to color the matrix in the mixed colors developed by the first and second photochromic compounds.

5. A photochromic article according to any one of claims 1 to 4, wherein the matrix is colored with the dye by heated immersion method.

6. A photochromic article according to any one of claims 1 to 4, wherein the matrix is colored with the dye by monomer dyeing method.

7. A photochromic article comprising:
a transparent matrix composed of a material selected from acrylic resins and urethane resins; and
at least two photochromic compounds dispersed in the matrix and selected from chromene derivatives, and fulgide and fulgimide compounds,
wherein the photochromic compounds have matching color fading speeds.

8. A photochromic article comprising:
a transparent matrix composed of a material selected from acrylic resins and urethane resins; and
at least two photochromic compounds dispersed in the matrix and selected from chromene derivatives, and fulgide and fulgimide compounds,
wherein the photochromic compounds have matching color fading times.

9. A photochromic article comprising:
a transparent matrix composed a material selected from acrylic resins and urethane resins;
at least two photochromic compounds dispersed in the matrix and selected from chromene derivatives and fulgide and fulgimide compounds; and
a dye for coloring the matrix and selected to minimize the phenomenon of color shift during the color fading phase.
